# EUROPEAN PATENT SPECIFICATION

(11) **EP 2 986 163 B1**
(45) Date of publication and mention of the grant of the patent: **19.04.2017**
(21) Application number: 14715809.1
(22) Date of filing: 14.03.2014
(51) Int. Cl.: A23L 33/17, A23L 33/00

(54) **NUTRITIONAL COMPOSITIONS INCLUDING CALCIUM BETA-HYDROXY-BETA-METHYLBUTYRATE, CASEIN PHOSPHOPEPTIDE, AND PROTEIN**
NAHRUNGSMITTELPRODUKTE MIT CALCIUM BETA-HYDROXY-BETA-METHYLBUTYRAT, CASEINPHOSPHOPEPTIDE UND PROTEINE
COMPOSITIONS NUTRITIONNELLES COMPRENANT DU BÊTA-HYDROXY-BÊTA-MÉTHYLBUTYRATE DE CALCIUM, DES PHOSPHOPEPTIDES DE CASEINE ET DES PROTEINES

(30) Priority: 15.03.2013 US 201361792060 P
(43) Date of publication of application: 24.02.2016
(73) Proprietor: Abbott Laboratories, North Chicago, IL 60064-6008 (US)
(72) Inventor: WALTON, Joseph, Westerville, Ohio 43081 (US); STEPP, Emily, Gahanna, Ohio 43230 (US)
(74) Representative: Boult Wade Tennant
(86) International application number: PCT/US2014/028294
(87) International publication number: WO 2014/144048

(56) References cited:
- EP-A1- 0 034 083
- WO-A1-2011/094544
- WO-A1-2011/156238
- WO-A1-2014/099904
- DATABASE WPI Week 201240 Thomson Scientific, London, GB; AN 2012-F19188 XP002724368, & CN 102 422 900 A (HEILONGJIANG FEIHE DAIRY CO LTD) 25 April 2012 (2012-04-25)

## Description

### FIELD

The present disclosure relates to nutritional compositions including protein and calcium β-hydroxy-β-methylbutyrate and methods of using and manufacturing the same. More particularly, the present disclosure relates to nutritional compositions including at least one source of protein and calcium β-hydroxy-β-methylbutyrate that has been treated with casein phosphopeptide.

### BACKGROUND

Protein-containing nutritional products are available that are specifically formulated to increase muscle mass and reduce muscle wasting in individuals. Some nutritional products may include calcium β-hydroxy-β-methylbutyrate (HMB) in combination with protein to further enhance muscle building in the body. However, nutritional products, such as liquids and emulsions, containing calcium HMB and protein have generally required high levels of protein stabilizers, such as organic acid salts including sodium and potassium citrates and phosphates. This is especially true for acidified shelf stable liquid beverages subjected to high heat, such as that of a retort sterilization process, during manufacturing for microbiological control. Addition of the required protein stabilizers leads to high levels of potassium, sodium, phosphorus, and combinations thereof in the nutritional products.

WO2011/094544 discloses nutritional compositions comprising HMB soluble protein and other protein, which may be monovalent caseinate phosphoserine, but not in the form of a complex and/or at specific ratios.

### SUMMARY

Provided herein are nutritional compositions including at least one source of protein and calcium β-hydroxy-β-methylbutyrate (HMB) that has been treated with casein phosphopeptide and methods of using and manufacturing the same. The nutritional compositions are stable and have limited levels of potassium, sodium, phosphorus, and combinations thereof.

In a first embodiment, a nutritional composition comprising a calcium HMB-casein phosphopeptide complex in an amount sufficient to provide about 0.4 grams to about 4 grams of HMB per serving is provided. The nutritional composition comprises about 5 grams to about 50 grams of protein per serving. In addition, the nutritional composition comprises low concentrations of potassium, sodium, and phosphorus, such as potassium in a concentration of less than about 2500 ppm, sodium in a concentration of less than about 1600 ppm, and phosphorus in a concentration of less than about 3200 ppm.

In a second embodiment, a method for preparing a protein-containing nutritional composition with calcium HMB is provided. The method comprises mixing calcium HMB with casein phosphopeptide to produce a calcium HMB-casein phosphopeptide complex. The weight ratio of calcium HMB to casein phosphopeptide is within a range of about 3:1 to about 70:1. The calcium HMB-casein phosphopeptide complex is mixed with at least one source of protein to produce a nutritional composition. The nutritional composition comprises about 5 grams to about 50 grams of protein per serving.

In a third embodiment, a method for preparing a stabilized nutritional composition comprising at least one source of protein and calcium HMB is provided. The method comprises adding calcium HMB and casein phosphopeptide to an aqueous solution at a weight ratio within a range of about 3:1 to about 70:1 of calcium HMB to casein phosphopeptide. The aqueous solution containing casein phosphopeptide and calcium HMB is agitated for about 3 minutes to about 20 minutes to form a calcium HMB-casein phosphopeptide complex. The calcium HMB-casein phosphopeptide complex is mixed with the at least one source of protein. The nutritional composition comprises about 5 grams to about 50 grams of protein per serving.

### DETAILED DESCRIPTION

The present disclosure is generally directed to nutritional compositions including protein and calcium β-hydroxy-β-methylbutyrate (HMB) that has been treated with casein phosphopeptide and methods of using and manufacturing the same. The nutritional compositions are stable and have reduced levels of potassium, sodium, phosphorus, and combinations thereof. By reducing the overall levels of potassium, sodium, phosphorus, and combinations thereof, the nutritional compositions disclosed herein are suitable for use by a wide variety of individuals, including those individuals with metabolic disorders who are sensitive to electrolytes, such as potassium ions, sodium ions, phosphorus ions (as hydrogen phosphate), and combinations thereof.

### Definitions

The terminology as set forth herein is for description of the embodiments only and should not be construed as limiting the invention as a whole.

The term "nutritional composition" as used herein, unless otherwise specified, refers to nutritional products in various forms including, but not limited to, liquids, powders, solids, semi-solids, semi-liquids, supplements, and any other nutritional food product known in the art. A powder may often be reconstituted to form a liquid nutritional composition. The nutritional compositions disclosed herein comprise at least one source of protein. In certain embodiments, the nutritional compositions further comprise at least one source of fat or at least one source of carbohydrate or both. The nutritional compositions disclosed herein are generally suitable for oral consumption by a human.

The term "calcium HMB" as used herein, unless otherwise specified, refers to the calcium salt of β-hydroxy-β-methylbutyrate (also referred to as beta-hydroxyl-3-methyl butyric acid, beta-hydroxy isovaleric acid, or HMB), which is most typically in a monohydrate form. All weights, percentages, and concentrations as used herein to characterize calcium HMB are based on the weight of calcium HMB monohydrate, unless otherwise specified.

The term "casein phosphopeptide" as used herein, unless otherwise specified, refers to an enzymatically hydrolyzed casein, which may be prepared by treating casein with trypsin. Casein phosphopeptide is commercially available from Friesland Brands B.V. (The Netherlands). Generally, the casein phosphopeptide is provided in powder form and contains 20% to 30% (by weight) casein phosphopeptide.

The terms "fat" and "oil" as used herein, unless otherwise specified, are used interchangeably to refer to lipid materials derived or processed from plants or animals or both. These terms also include synthetic lipid materials so long as such synthetic materials are suitable for oral administration to humans.

The term "shelf stable" as used herein to describe a nutritional composition, unless otherwise specified, refers to a nutritional composition, particularly a liquid, that remains commercially stable after being packaged and then stored at 18-24°C for at least 3 months, including from about 6 months to about 24 months, and also including from about 12 months to about 18 months.

The terms "sterile," "sterilized," and "sterilization" as used herein, unless otherwise specified, refer to the reduction in transmissible agents such as fungi, bacteria, viruses, spore forms, and so forth, in food or on food grade surfaces to the extent necessary to render such foods suitable for human consumption. Sterilization processes may include various techniques involving the application of heat, peroxide or other chemicals, irradiation, high pressure, filtration, or combinations or variations thereof.

The term "serving" as used herein, unless otherwise specified, is intended to be construed as any amount which is intended to be consumed by an individual in one sitting or within one hour or less.

The terms "liquid product" and "liquid" as used herein to describe a form of a nutritional composition, unless otherwise specified, refers to nutritional compositions in ready-to-drink liquid form, concentrated form, and liquids made by reconstituting the powders described herein prior to use. The liquid may also be formulated as a suspension, an emulsion, a solution, and so forth.

The terms "solid product" and "solid" as used herein to describe a form of a nutritional composition, unless otherwise specified, refers to nutritional compositions formed as bars, sticks, cookies, breads, cakes, or other baked goods, frozen liquids, candy, breakfast cereals, powders, granulated solids, or other particulates, snack chips or bites, frozen or retorted entrees and so forth.

The terms "powder" and "reconstitutable powder" as used herein to describe a form of a nutritional composition, unless otherwise specified, refers to nutritional compositions in flowable or scoopable form that can be reconstituted with water or another aqueous liquid prior to consumption and includes both spray dried and dry mixed/dry blended powders.

The term "semi-solid," as used herein to describe a form of a nutritional composition, unless otherwise specified, refers to nutritional compositions that are intermediate in properties, such as rigidity, between solids and liquids. Examples of semi-solids include, but are not limited to, puddings, yogurts, gels, gelatins, and doughs.

The term "semi-liquid" as used herein to describe a form of a nutritional composition, unless otherwise specified, refers to nutritional compositions that are intermediate in properties, such as flow properties, between liquids and solids. Examples of semi-liquids include, but are not limited to, thick shakes, liquid yogurts, and liquid gels.

All percentages, parts and ratios as used herein, are by weight of the total nutritional composition, unless otherwise specified. Numerical ranges as used herein are intended to include every number and subset of numbers within that range, whether specifically disclosed or not. Further, these numerical ranges should be construed as providing support for a claim directed to any number or subset of numbers in that range. For example, a disclosure of from 1 to 10 should be construed as supporting a range of from 2 to 8, from 3 to 7, from 5 to 6, from 1 to 9, from 3.6 to 4.6, from 3.5 to 9.9, and so forth.

All references to singular characteristics or limitations of the present disclosure shall include the corresponding plural characteristic or limitation, and vice versa, unless otherwise specified or clearly implied to the contrary by the context in which the reference is made.

All combinations of method or process steps as used herein can be performed in any order, unless otherwise specified or clearly implied to the contrary by the context in which the referenced combination is made.

The various embodiments of the present disclosure may also be substantially free of any optional or selected ingredient or feature described herein, provided that the remaining nutritional composition still contains all of the required ingredients or features as described herein. In this context, and unless otherwise specified, the term "substantially free" means that the selected nutritional composition contains less than a functional amount of the optional ingredient, typically less than 5% by weight, including less than 4% by weight, including less than 3% by weight, including less than 2% by weight, including less than 1% by weight, including less than 0.5% by weight, including less than 0.1% by weight, and also including zero percent by weight of such optional or selected ingredient.

The nutritional compositions and corresponding methods of use and manufacturing methods of the present disclosure can comprise, consist of, or consist essentially of the elements and limitations of the disclosure as described herein, as well as any additional or optional ingredients, components, or limitations described herein or otherwise useful in the nutritional compositions and methods.

In a first embodiment, a nutritional composition comprising a calcium HMB-casein phosphopeptide complex in an amount sufficient to provide about 0.4 grams to about 4 grams of HMB per serving is provided. The nutritional composition comprises about 5 grams to about 50 grams of protein per serving. In addition, the nutritional composition comprises potassium in a concentration of less than about 2500 ppm, sodium in a concentration of less than about 1600 ppm, and phosphorus in a concentration of less than about 3200 ppm.

In a second embodiment, a method for preparing a protein-containing nutritional composition with calcium HMB is provided. The method comprises mixing calcium HMB with casein phosphopeptide to produce a calcium HMB-casein phosphopeptide complex. The weight ratio of calcium HMB to casein phosphopeptide is within a range of about 3:1 to about 70:1. The calcium HMB-casein phosphopeptide complex is mixed with at least one source of protein to produce a nutritional composition. The nutritional composition comprises about 5 grams to about 50 grams of protein per serving.

In a third embodiment, a method for preparing a stabilized nutritional composition comprising at least one source of protein and calcium HMB is provided. The method comprises adding calcium HMB and casein phosphopeptide to an aqueous solution at a weight ratio within a range of about 3:1 to about 70:1 of calcium HMB to casein phosphopeptide. The aqueous solution containing casein phosphopeptide and calcium HMB is agitated for about 3 minutes to about 20 minutes to form a calcium HMB-casein phosphopeptide complex. The calcium HMB-casein phosphopeptide complex is mixed with the at least one source of protein. The nutritional composition comprises about 5 grams to about 50 grams of protein per serving.

In certain embodiments according to the first, second, and third embodiments the nutritional compositions are formulated as, and intended for consumption in, any known or otherwise suitable oral product form. Any solid, liquid, semi-solid, semi-liquid, or powder product form, including combinations or variations thereof, are suitable for use herein, provided that such forms allow for safe and effective oral delivery to the subject via oral consumption of the ingredients as also defined herein.

In certain embodiments of the first, second, and third embodiments, the nutritional composition may be a solid product. Non-limiting examples of solid products include snack and meal replacement products, including those formulated as bars, sticks, cookies or breads or cakes or other baked goods, frozen liquids, candy, breakfast cereals, powders or reconstitutable powders or granulated solids or other particulates, snack chips or bites, frozen or retorted entrees and so forth. In certain embodiments according to the first, second, and third embodiments, when the nutritional composition is a solid product, the serving may be about 25 grams to about 150 grams.

In certain other embodiments of the first, second, and third embodiments, the nutritional composition may be a liquid product. Non-limiting examples of liquid products include snack and meal replacement products, hot or cold beverages, carbonated or noncarbonated beverages, juices or other acidified beverages, milk or soy-based beverages, shakes, coffees, teas, enteral feeding compositions, and so forth. Generally, the liquid products are formulated as suspensions or emulsions, but the liquid products can also be formulated in any other suitable forms such as clear liquids, solutions, liquid gels, liquid yogurts, and so forth. In certain embodiments according to the first, second, and third embodiments, when the nutritional composition is a liquid product, the serving may be about 100 milliliters to about 500 milliliters. In certain other embodiments according to the first, second, and third embodiments, when the nutritional composition is a liquid, the serving is about 237 milliliters (~8 fl. oz.). In other embodiments according to the first, second, and third embodiments, when the nutritional composition is a liquid, the serving is about 177 milliliters to about 414 milliliters (~6 fl. oz. to ∼14 fl. oz.). In yet other embodiments according to the first, second, and third embodiments, when the nutritional composition is a liquid, the serving is about 237 milliliters to about 296 milliliters (∼8 fl. oz. to ∼10 fl. oz.).

In yet other embodiments according to the first, second, and third embodiments, the nutritional composition may be formulated as semi-solid or semi-liquid compositions (e.g., puddings, gels, yogurts), as well as more conventional product forms such as capsules, tablets, caplets, pills, and so forth. In other embodiments of the first, second, and third embodiments, the nutritional composition may be in the form of lozenges, tablets (e.g., chewable, coated), pastes, gels, or yogurts.

As previously mentioned, according to the first, second, and third embodiments disclosed herein, the nutritional composition and methods include a calcium HMB-casein phosphopeptide complex. The terms "calcium HMB-casein phosphopeptide complex" or "complex" as used herein, unless otherwise specified, refers to calcium HMB that, prior to incorporation into a nutritional composition formulation, has been treated with casein phosphopeptide such that at least a portion, including, but not limited to, 1% to 90% by weight, including more than 10% by weight, or even 50% by weight, or even 60% by weight, or even 70% by weight, or even 80% by weight, or even 90% by weight, of the divalent calcium ions present in the calcium HMB is coordinated or chelated or otherwise bound to the casein phosphopeptide such that the divalent calcium ions are bound up and rendered insoluble in solution and not available for other chemical reaction or interaction in solution, such as a chemical reaction or interaction with protein species present in the solution. As such, when the calcium HMB-casein phosphopeptide complex is added into the nutritional compositions of the first, second, and third embodiments of the present disclosure, a majority of the divalent calcium ions are bound up in the complex. In addition to rendering the divalent calcium ions insoluble in solution, the casein phosphopeptide also improves the absorption of the divalent calcium ions by the human body.

The use of calcium HMB in the form of the calcium HMB-casein phosphopeptide complex results in a reduced amount of divalent calcium ions available for solubilizing into a nutritional composition as compared to untreated calcium HMB, since a majority of the divalent calcium ions from calcium HMB are coordinated or chelated or otherwise bound to the casein phosphopeptide. As such, undesirable interactions between soluble divalent calcium ions and protein and other ingredients present in the nutritional composition are reduced, particularly during high temperature processing, and the overall stability, shelf life, and viscosity of the nutritional composition is improved.

According to the first embodiment and certain embodiments of the second and third embodiments disclosed herein, the nutritional composition has reduced levels of electrolytes, such as potassium, sodium, phosphorus, and combinations thereof. For example, nutritional compositions according to the first embodiment and certain embodiments of the second and third embodiments comprise potassium in a concentration of less than about 2500 ppm, sodium in a concentration of less than about 1600 ppm, and phosphorus in a concentration of less than about 3200 ppm. In certain other embodiments according to the first, second, and third embodiments, the nutritional composition comprises potassium in a concentration of less than about 1000 ppm, sodium in a concentration of less than about 1100 ppm, and phosphorus in a concentration of less than about 800 ppm. In certain embodiments according to the first, second, and third embodiments, the nutritional composition has a potassium concentration ranging from about 800 ppm to about 2500 ppm, including from about 800 ppm to about 2000 ppm, including from about 800 ppm to about 1500 ppm, and also including from about 800 ppm to about 1000 ppm. In certain embodiments according to the first, second, and third embodiments, the nutritional composition has a sodium concentration ranging from about 910 ppm to about 1600 ppm, including from about 910 ppm to about 1400 ppm, including from about 910 ppm to about 1200 ppm, and also including from about 910 ppm to about 1100 ppm. In certain embodiments according to the first, second, and third embodiments, the nutritional composition has a phosphorus concentration ranging from about 625 ppm to about 3200 ppm, including from about 625 ppm to about 2000 ppm, including from about 625 ppm to about 1000 ppm, and also including from about 625 ppm to about 800 ppm.

In addition, in certain embodiments according to the first, second, and third embodiments disclosed herein, the combined amount of sodium, phosphorus, and potassium in the nutritional composition is no more than about 7000 ppm. In certain other embodiments according to the first, second, and third embodiments disclosed herein, the combined amount of sodium, phosphorus, and potassium in the nutritional composition ranges from about 2300 ppm to about 5000 ppm.

The reduction in electrolyte levels is accomplished by using casein phosphopeptide, which contains low levels of sodium, potassium, phosphorus, calcium, and magnesium, without having to utilize conventional amounts of potassium and sodium containing phosphates and citrates. Conventional nutritional compositions comprising calcium HMB and protein have required the addition of potassium and sodium containing phosphates and citrates to stabilize the nutritional composition by preventing the interaction or reaction between divalent calcium ions and protein. In fact, the amounts of potassium and sodium containing phosphates and citrates required to stabilize conventional nutritional compositions result in an undesirably high content of potassium, sodium, and phosphorus such that the resulting nutritional composition is not particularly suitable for use by some individuals, including individuals with diabetes, hypertension, heart disease, chronic kidney dysfunction, and combinations thereof. However, utilization of casein phosphopeptide in combination with calcium HMB allows nutritional compositions according to the first, second and third embodiments of the present disclosure to have much lower levels of potassium, sodium, and phosphorus as compared to conventional nutritional compositions containing calcium HMB and protein.

In certain other embodiments according to the first, second, and third embodiments disclosed herein, the nutritional compositions comprise potassium and sodium phosphates and citrates in combination with the calcium HMB-casein phosphopeptide complex. However, the amounts of potassium and sodium phosphates and citrates will be considerably lower as compared to conventional calcium HMB and protein containing nutritional compositions such that the contribution of potassium, sodium, and phosphorus to the nutritional composition is reduced.

In certain embodiments according to the first, second, and third embodiments described herein, the nutritional composition has a ratio of potassium to sodium (potassium:sodium) that is greater than 1, and a ratio of phosphorus to sodium (phosphorus:sodium) that is greater than 1. A ratio of potassium to sodium that is greater than 1 *(e.g.,* 1.5:1 or 2:1 or 3:1, *etc.)* may be beneficial to cardiovascular health and may reduce the risk of death from cardiovascular disease. A ratio of phosphorus to sodium that is greater than 1 (*e*.*g*., 1.5:1 or 2:1 or 3:1, *etc*.) may be beneficial for lowering the risk of developing kidney disease, heart disease, and obesity.

As previously described, nutritional compositions according to the first, second and third embodiments include about 0.4 grams to about 4 grams of HMB per serving. The range of about 0.4 grams to about 4 grams refers to the amount of HMB, and, accordingly, the amount of calcium HMB utilized will necessarily be higher. Calcium HMB is most typically used in the monohydrate form, although other forms may be utilized. The calcium HMB used in the methods disclosed herein can come from virtually any source. Calcium HMB monohydrate is commercially available from Technical Sourcing International (TSI) of Salt Lake City, Utah.

The amount of calcium HMB contained within the nutritional compositions according to the first, second and third embodiments can also be described in terms of concentration or ppm. In certain embodiments of the first, second and third embodiments disclosed herein, the nutritional composition includes about 1500 ppm to about 16000 ppm calcium HMB. In other embodiments of the first, second and third embodiments, the nutritional composition includes about 3900 ppm to about 5900 ppm calcium HMB.

As previously described, nutritional compositions according to the first, second, and third embodiments include about 5 grams to about 50 grams of at least one source of protein per serving. For example, in certain embodiments according to the first, second, and third embodiments disclosed herein, the nutritional composition comprises about 5 grams to about 45 grams of at least one source of protein per serving, including about 10 grams to about 40 grams of at least one source of protein per serving, including about 15 grams to about 35 grams of at least one source of protein per serving, and also including about 20 grams to about 30 grams of at least one source of protein per serving.

The at least one source of protein may include, but is not limited to, intact, hydrolyzed, and partially hydrolyzed protein, which may be derived from any known or otherwise suitable source such as milk *(e.g.,* casein, whey), animal *(e.g.,* meat, fish), cereal *(e.g.,* rice, corn), vegetable (e.g., soy, pea), and combinations thereof. Non-limiting examples of the at least one source of protein include milk protein isolates, milk protein concentrates, casein protein isolates, whey protein concentrates, whey protein isolates, whey protein hydrolysates, sodium or calcium caseinates, whole cow's milk, partially or completely defatted milk, soy protein isolates, soy protein concentrates, soy protein hydrolysates, pea protein concentrates, pea protein isolates, pea protein hydrolysates, and so forth. For example, in certain embodiments according to the first, second, and third embodiments, the at least one source of protein is selected from the group consisting of calcium caseinate, sodium caseinate, milk protein concentrate, milk protein isolate, whey protein concentrate, whey protein isolate, whey protein hydrolysate, soy protein isolate, soy protein concentrate, soy protein hydrolysate, pea protein concentrate, pea protein isolate, pea protein hydrolysate, and combinations thereof.

Nutritional compositions according to the first, second, and third embodiments include, in certain embodiments, at least one source of fat per serving or at least one source of carbohydrate per serving or both. For example, in an exemplary embodiment, the nutritional composition according to the first, second, and third embodiments comprises about 0.1 grams to about 20 grams of at least one source of fat per serving, and about 0.1 grams to about 50 grams of at least one source of carbohydrate per serving. In certain other embodiments according to the first, second, and third embodiments, the nutritional composition comprises about 1 gram to about 18 grams of at least one source of fat per serving, including about 5 grams to about 15 grams of at least one source of fat per serving, also including about 8 grams to about 12 grams of fat per serving, and further including about 9 grams to about 11 grams of fat per serving. In other embodiments according to the first, second, and third embodiments, the nutritional composition includes no fat, or essentially no fat (*i*.*e*., less than about 0.5 grams of fat per serving). In certain embodiments according to the first, second, and third embodiments, the nutritional composition comprises about 1 gram to about 45 grams of carbohydrate per serving, including about 5 grams to about 40 grams of carbohydrate per serving, also including about 10 grams to about 35 grams of carbohydrate per serving, also including about 15 grams to about 30 grams of carbohydrate per serving, and further including about 20 grams to about 25 grams of carbohydrate per serving.

As mentioned above, in certain embodiments according to the first, second, and third embodiments described herein, the nutritional composition comprises at least one source of fat per serving. The at least one source of fat may be plant based or animal based or both. Non-limiting examples of a source of fat suitable for use in the nutritional compositions describe herein include high oleic safflower oil, high oleic sunflower oil, canola oil, soy oil, coconut oil, fractionated coconut oil, corn oil, olive oil, safflower oil, MCT oil (medium chain triglycerides), palm and palm kernel oils, palm olein, marine oils, borage oil, cottonseed oils, and combinations thereof. For example, in certain embodiments according to the first, second, and third embodiments, the at least one source of fat is selected from the group consisting of high oleic safflower oil, high oleic sunflower oil, canola oil, soy oil, and combinations thereof.

As previously described, nutritional compositions according to certain embodiments of the first, second, and third embodiments may include at least one source of carbohydrate per serving. The at least one source of carbohydrate suitable for use in the nutritional compositions disclosed herein may be simple, complex, or variations or combinations thereof. Generally, any source of carbohydrate may be used so long as it is suitable for use in oral nutritional compositions and is otherwise compatible with any other selected ingredient or feature present in the nutritional composition. Non-limiting examples of a source of carbohydrate suitable for use in the nutritional compositions described herein include maltodextrin, sucromalt, hydrolyzed or modified starch or cornstarch, glucose polymers, corn syrup, corn syrup solids, rice-derived carbohydrates, sucrose, glucose, fructose, lactose, high fructose corn syrup, honey, glycerine, sugar alcohols (e.g., maltitol, erythritol, sorbitol), and combinations thereof. In certain embodiments according to the first, second, and third embodiments, the at least one source of carbohydrate is selected from the group consisting of maltodextrin, sucrose, fructose, sucromalt, and combinations thereof.

In certain embodiments according to the first, second, and third embodiments, the nutritional compositions are aqueous emulsions. These emulsions are flowable or drinkable liquids at from 1° C to 25° C and are typically in the form of oil-in-water, water-in-oil, or complex aqueous emulsions, although such emulsions are most typically in the form of oil-in-water emulsions having a continuous aqueous phase and a discontinuous oil phase.

The nutritional compositions formulated as aqueous emulsions may be and typically are shelf-stable. The aqueous emulsions typically contain up to about 95% by weight of water, including from about 50% to about 95%, also including from about 60% to about 90%, and also including from about 70% to about 85%, of water by weight of the nutritional composition.

The nutritional compositions according to the first, second, and third embodiments described herein may be formulated with sufficient kinds and amounts of nutrients so as to provide a sole, primary, or supplemental source of nutrition, or to provide a specialized nutritional composition for use by individuals afflicted with specific diseases or conditions, such as diabetes or chronic kidney dysfunction. The nutritional compositions, and particularly nutritional compositions formulated as a liquid or an emulsion, may have a variety of product densities, but most typically have a density greater than about 1.055 g/mL, including from 1.06 g/ml to 1.12 g/ml, and also including from 1.085 g/ml to 1.10 g/ml.

In certain embodiments according to the first, second, and third embodiments, the nutritional composition may have a caloric density tailored to the nutritional needs of the ultimate user, although in most instances the nutritional composition comprises from about 50 kcal to about 500 kcal per serving, including from about 100 kcal to about 400 kcal per serving, including about 150 kcal to about 350 kcal per serving, and also including from about 200 kcal to about 320 kcal per serving. As previously mentioned, the nutritional compositions according to the first, second, and third embodiments comprise a calcium HMB-casein phosphopeptide complex sufficient to provide about 0.4 grams to about 4 grams of HMB per serving, including from about 0.75 grams to about 3 grams of HMB per serving, including about 1 gram to about 2 grams of HMB per serving, and also including 1.5 grams of HMB per serving.

The nutritional compositions, and particularly nutritional compositions formulated as a liquid or an emulsion, may have a pH ranging from about 3 to about 8, but are most advantageously in a range of from about 4.5 to about 7.5, including from about 5.5 to about 7.3, including from about 6.2 to about 7.2. However, in certain embodiments according to the first, second, and third embodiments disclosed herein, the nutritional composition is formulated as a clear liquid having a pH of 2 to 5, and also having no more than 0.5% fat by weight of the nutritional composition.

In certain embodiments according to the first, second, and third embodiments of the present disclosure, the calcium HMB-casein phosphopeptide complex is the sole source of calcium HMB present in the nutritional composition; that is, all of the HMB present in the nutritional composition comes from the calcium HMB-casein phosphopeptide complex. In other embodiments, the HMB present in the nutritional composition is from the calcium HMB-casein phosphopeptide complex and untreated calcium HMB; that is, the HMB may be a combination of the calcium HMB-casein phosphopeptide complex and a calcium HMB source that has not been treated with casein phosphopeptide.

According to the second embodiment, a method for preparing a protein-containing nutritional composition with calcium HMB is provided. The method comprises mixing calcium HMB with casein phosphopeptide to produce a calcium HMB-casein phosphopeptide complex. The weight ratio of calcium HMB to casein phosphopeptide is within a range of about 3:1 to about 70:1. The calcium HMB-casein phosphopeptide complex is mixed with at least one source of protein to produce a nutritional composition.

In certain embodiments according to the second embodiment, the step of mixing calcium HMB with casein phosphopeptide comprises the following: adding the casein phosphopeptide to an aqueous solution; adding the calcium HMB to the aqueous solution; and agitating the aqueous solution containing the casein phosphopeptide and the calcium HMB for about 3 minutes to about 20 minutes to form the calcium HMB-casein phosphopeptide complex. In certain embodiments according to the second embodiment, the aqueous solution may comprise potassium and phosphate sources including, but not limited to, potassium citrate, disodium phosphate, potassium phosphate dibasic, potassium phosphate monobasic, magnesium phosphate dibasic, and combinations thereof. In addition, in certain embodiments of the second embodiment, the aqueous solution is at a temperature of 40° C to 75° C, including 49° C to 71° C, and also including 55° C to 65° C. Moreover, in certain embodiments according to the second embodiment, the aqueous solution containing the casein phosphopeptide and the calcium HMB is agitated for about 5 minutes to about 15 minutes, including about 8 minutes to about 12 minutes, and also including about 10 minutes.

As described above, and according to the second embodiment, the weight ratio of calcium HMB to casein phosphopeptide is within a range of about 3:1 to about 70:1. For example, in certain embodiments according to the second embodiment, the weight ratio of calcium HMB to casein phosphopeptide ranges from about 3:1 to about 70:1, including about 3:1 to about 50:1, including about 3:1 to about 20:1, including about 3:1 to about 12:1, including about 5:1 to about 10:1, including about 6:1 to about 8:1, and also including about 6.7:1 to about 7:1.

In certain embodiments according to the second embodiment, the step of mixing the calcium HMB-casein phosphopeptide complex with the at least one source of protein further comprises mixing at least one source of fat and at least one source of carbohydrate along with the calcium HMB-casein phosphopeptide complex and the at least one source of protein to produce a nutritional composition. Any of the previously mentioned sources of protein, fat, and carbohydrate can be utilized in these embodiments.

According to the third embodiment, a method for preparing a stabilized nutritional composition comprising at least one source of protein and calcium HMB is provided. As previously described, the method comprises adding calcium HMB and casein phosphopeptide to an aqueous solution at a weight ratio within a range of about 3:1 to about 70:1 of calcium HMB to casein phosphopeptide. The aqueous solution containing casein phosphopeptide and calcium HMB is agitated for about 3 minutes to about 20 minutes to form a calcium HMB-casein phosphopeptide complex. The calcium HMB-casein phosphopeptide complex is mixed with the at least one source of protein to produce a stabilized nutritional composition.

In certain embodiments according to the third embodiment, the aqueous solution may comprise potassium and phosphate sources including, but not limited to, potassium citrate, disodium phosphate, potassium phosphate dibasic, magnesium phosphate dibasic, and combinations thereof. In addition, in certain embodiments of the third embodiment, the aqueous solution is at a temperature of about 40° C to about 75° C, including about 49° C to about 71° C, and also including about 55° C to about 65° C. Moreover, in certain embodiments according to the third embodiment, the aqueous solution containing the casein phosphopeptide and the calcium HMB is agitated for about 5 minutes to about 15 minutes, including about 8 minutes to about 12 minutes, and also including about 10 minutes.

As described above, and according to the third embodiment, the weight ratio of calcium HMB to casein phosphopeptide is within a range of about 3:1 to about 70:1. For example, in certain embodiments according to the third embodiment, the weight ratio of calcium HMB to casein phosphopeptide ranges from about 3:1 to about 70:1, including about 5:1 to about 10:1, including about 6:1 to about 8:1, and also including about 6.7:1 to about 7:1.

In certain embodiments according to the third embodiment, the step of mixing the calcium HMB-casein phosphopeptide complex with the at least one source of protein further comprises mixing at least one source of fat and at least one source of carbohydrate along with the calcium HMB-casein phosphopeptide complex and the at least one source of protein to produce a stabilized nutritional composition. Any of the previously mentioned sources of protein, fat, and carbohydrate can be utilized in these embodiments

The concentration of calcium HMB-casein phosphopeptide complex in the nutritional compositions according to the first, second, and third embodiments may range up to about 20%, including up to about 10%, including from about 0.1% to about 8%, also including from about 0.2% to about 5.0%, also including from about 0.3% to about 3%, and further including from about 0.4% to about 1.5%, by weight of the nutritional composition. In certain embodiments according to the first, second, and third embodiments, the nutritional composition includes the calcium HMB-casein phosphopeptide complex in an amount of from about 0.5% to about 2.5%, including from about 0.5% to about 2.0%, including from about 0.6% to about 2.0%, including from about 0.7% to about 1.8%, and also including from about 0.8% to about 1.5% by weight of the nutritional composition.

In certain embodiments of the present disclosure, the nutritional composition may optionally include an anti-nutrient component, such as an inhibitor of electrolyte absorption, sometimes referred to an electrolyte depleter. The inhibitor of electrolyte absorption may be particularly suitable in nutritional compositions formulated as powders and solids, such as meal replacement bars, snack bars, and nutrition bars. The inhibitor of electrolyte absorption can be utilized in the nutritional composition to minimize and reduce the absorption of unwanted and undesirable electrolytes in the body, including potassium, sodium, phosphorus, and combinations thereof, by binding the electrolyte such that it cannot be absorbed into the body. The inhibitor of electrolyte absorption may be particularly useful in nutritional compositions suitable for use by individuals with chronic kidney dysfunction, renal dysfunction, hyperphosphatemia, or other individuals that are required to closely monitor and limit their intake of electrolytes such as potassium, sodium, phosphorus, and combinations thereof.

Suitable inhibitors of electrolyte absorption include, for example, calcium bicarbonate, calcium acetate, lanthanum carbonate, and combinations thereof. In certain embodiments, calcium acetate may be particularly desirable as it does not promote aluminum absorption. The nutritional compositions may include the inhibitor of electrolyte absorption in an amount of from about 0.01% to about 5%, including from about 0.01% to about 4%, including from about 0.1% to about 3% by weight of the nutritional composition. In certain embodiments, the nutritional composition will provide the individual user with about 750 milligrams per day to about 1500 milligrams per day of the inhibitor of electrolyte absorption. This may be provided in one, two, three, four or more individual doses or servings.

As described above, nutritional compositions according to the first, second, and third embodiments include at least one source of protein, and certain embodiments include at least one source of fat, at least one source of carbohydrate, and combinations thereof. Although total amounts or concentrations of the at least one source of protein, the at least one source of fat, and the at least one source of carbohydrate may vary depending upon the nutritional needs of the intended user, such amounts or concentrations generally fall within one of the following embodied ranges, inclusive of any other protein, fat, or carbohydrate ingredients as described herein.

In certain embodiments according to the first, second, and third embodiments, the nutritional composition has a carbohydrate concentration ranging from about 10% to about 80%, including from about 30% to about 60%, and also including from about 50% to about 70% by weight of the nutritional composition. In certain embodiments according to the first, second, and third embodiments, the nutritional composition has a fat concentration ranging from about 1% to about 30%, including from about 2% to about 15%, and also including from about 4% to about 10%, by weight of the nutritional composition. In certain other embodiments according to the first, second, and third embodiments, the nutritional composition comprises no fat, or essentially no fat (*i*.*e*., less than about 0.5 grams of fat per serving). Moreover, in certain embodiments according to the first, second, and third embodiments, the nutritional composition has a protein concentration ranging from about 0.5% to about 30%, including from about 1% to about 15%, and also including from about 2% to about 10%, by weight of the nutritional composition.

The level or amount of protein, fat, and carbohydrate in the nutritional compositions according to the first, second, and third embodiments may also be characterized in addition to or in the alternative as a percentage of the total calories in the nutritional composition as set forth in the following table.

| Nutrient (% Calories) | Embodiment A | Embodiment B | Embodiment C |
|---|---|---|---|
| Carbohydrate | 1-98 | 10-75 | 30-50 |
| Fat | 0-98 | 20-85 | 35-55 |
| Protein | 1-98 | 5-70 | 15-35 |

In other words, in certain embodiments according to the first, second, and third embodiments, the nutritional composition comprises, as a percentage of the total calories of the nutritional composition, 1% to 98% carbohydrate, 0% to 98% fat, and 1% to 98% protein. In other embodiments, the nutritional composition comprises, as a percentage of the total calories of the nutritional composition, 10% to 75% carbohydrate, 20% to 85% fat, and 5% to 70% protein. In yet other embodiments, the nutritional composition comprises, as a percentage of the total calories of the nutritional composition, 30% to 50% carbohydrate, 35% to 55% fat, and 15% to 35% protein.

The nutritional compositions according to the first, second, and third embodiments of the present disclosure comprise calcium as a desirable ingredient suitable for use in developing or maintaining healthy muscle in targeted individuals. Most, such as greater than about 50%, or all of the calcium present in the nutritional compositions is provided by calcium HMB. However, any other calcium source may be used provided that such other calcium source is compatible with the elements of the nutritional compositions.

To minimize the taste and stability issues in the nutritional compositions, resulting from calcium and protein reactions or interactions, the nutritional compositions according to the first, second, and third embodiments are formulated so as to minimize the extent to which the calcium is solubilized in the nutritional compositions. As such, solubilized calcium concentrations in the nutritional compositions range from about 200 mg/kg to about 500 mg/kg, including about 250 mg/kg to about 450 mg/kg, including about 300 mg/kg to about 400 mg/kg, including about 310 mg/kg to about 350 mg/kg, and also including about 315 mg/kg to about 320 mg/kg (where mg/kg are "solubilized calcium in mg" per "kg of nutritional composition"). In this context, the term "solubilized calcium" refers to free, ionized, or supernatant calcium in the nutritional composition as measured at 20° C.

In certain embodiments according to the first, second, and third embodiments disclosed herein, the nutritional composition may further comprise optional ingredients to modify the physical, chemical, aesthetic, hedonic or processing characteristics of the nutritional composition or serve as pharmaceutical or additional nutritional components when used in the targeted population. Many such optional ingredients are known or otherwise suitable for use in medical food or other nutritional products or pharmaceutical dosage forms and may also be used in the nutritional compositions described herein, provided that such optional ingredients are safe and effective for oral administration and are compatible with the other ingredients in the selected product form.

Non-limiting examples of such optional ingredients include preservatives, emulsifying agents, buffers, creatine, fructooligosaccharides, galactooligosaccharides, polydextrose, and other prebiotics, probiotics, pharmaceutical actives, anti-inflammatory agents, additional nutrients, colorants, flavors, thickening agents and stabilizers, emulsifying agents, lubricants, and so forth.

In certain embodiments according to the first, second, and third embodiments disclosed herein, the nutritional composition may further comprise at least one sweetening agent. Preferably, the at least one sweetening agent is at least one sugar alcohol such as maltitol, erythritol, sorbitol, xylitol, mannitol, isolmalt, and lactitol, or at least one artificial or high potency sweetener such as acesulfame K, aspartame, sucralose, saccharin, stevia, tagatose, and combinations thereof. The sweetening agents, especially as a combination of a sugar alcohol and an artificial sweetener, are especially useful in formulating liquid nutritional compositions having a desirable favor profile. These sweetener combinations are especially effective in masking undesirable flavors, for example, as sometimes associated with the addition of vegetable proteins to a liquid nutritional composition. In certain embodiments according to the first, second, and third embodiments disclosed herein, the nutritional composition may comprise at least one sugar alcohol with a concentration in a range from 0.01% to 10%, including from 0.5% to 8%, and also including from 1% to 6%, by weight of the nutritional composition. In certain embodiments according to the first, second, and third embodiments disclosed herein, the nutritional composition may comprise at least one artificial sweetener with a concentration in a range from 0.01% to 10%, including from 0.05% to 5%, also including from 0.1% to 1.0%, by weight of the nutritional composition.

A flowing agent or anti-caking agent may be included in certain embodiments of the nutritional composition according to the first, second, and third embodiments disclosed herein to retard clumping or caking over time of nutritional compositions formulated as a powder and to make the powder flow easily from its container. Any known flowing or anti-caking agents that are known or otherwise suitable for use in a powder product are suitable for use herein, non-limiting examples of which include tricalcium phosphate, silicates, and combinations thereof. The concentration of the flowing agent or anti-caking agent in certain embodiments of the nutritional composition according to the first, second, and third embodiments disclosed herein varies depending upon the product form, the other selected ingredients, the desired flow properties, and so forth, but most typically range from 0.1% to 4%, including from 0.5% to 2%, by weight of the nutritional composition.

In certain embodiments according to the first, second, and third embodiments disclosed herein, the nutritional composition may comprise a thickener. Any thickener that is known or otherwise suitable for use in a nutritional composition is also suitable for use herein, some non-limiting examples of which include stabilizers and gums such as carrageenan, gellan gum, and xanthan gum. In certain embodiments according to the first, second, and third embodiments disclosed herein, the thickener may represent from 0.1% to 5.0%, including from 0.5% to 3%, and also including from 0.7% to 1.5%, by weight of the nutritional composition.

In certain other embodiments according to the first, second, and third embodiments disclosed herein, the nutritional composition may further comprise any of a variety of vitamins or related nutrients, non-limiting examples of which include vitamin A, vitamin E, vitamin D2 (ergocalciferol), vitamin D3 (cholecalciferol), vitamin A palmitate, vitamin E acetate, vitamin C palmitate (ascorbyl palmitate), vitamin K, thiamine, riboflavin, pyridoxine, vitamin B₁₂, carotenoids (e.g., beta-carotene, zeaxanthin, lutein, lycopene), niacin, folic acid, pantothenic acid, biotin, vitamin C, choline, inositol, salts and derivatives thereof, and combinations thereof.

In yet other embodiments according to the first, second, and third embodiments disclosed herein, the nutritional composition comprises any of a variety of additional minerals, non-limiting examples of which include selenium, iodine, magnesium, iron, zinc, manganese, copper, molybdenum, chromium, chloride, and combinations thereof.

In certain embodiments according to the first, second, and third embodiments disclosed herein, the nutritional compositions optionally include one or more masking agents to reduce or otherwise obscure the development over time of any residual bitter flavors and after taste in the nutritional compositions, particularly liquid or emulsion formulations. Suitable masking agents include natural and artificial sweeteners, sodium sources such as sodium chloride, and hydrocolloids, such as guar gum, xanthan gum, carrageenan, gellan gum, and combinations thereof. The amount of masking agent in the nutritional composition may vary depending upon the particular masking agent selected, other ingredients in the formulation, and other formulation or product target variables. Such amounts, however, most typically range from 0.1% to 5%, including form 0.15% to 3.0%, and also including from 0.18% to 2.5%, by weight of the nutritional composition.

The various embodiments of the nutritional composition according to the first, second, and third embodiments disclosed herein may be prepared by any process or suitable method (now known or known in the future) for making a selected product form, such as a solid, a powder, or a liquid or emulsion. Many such techniques are known for any given product form such as nutritional liquids or nutritional powders and can easily be applied by one of ordinary skill in the art to the various embodiments of the nutritional composition according to the first, second, and third embodiments disclosed herein.

In one suitable manufacturing process for nutritional compositions formulated as a liquid, for example, at least three separate slurries are prepared, including a protein-in-fat (PIF) slurry, a carbohydrate-mineral (CHO-MIN) slurry, and a protein-in-water (PIW) slurry. In one example, the PIF slurry is formed by heating and mixing an oil *(e.g.,* canola oil, corn oil) and then adding an emulsifier (*e*.*g*., lecithin), fat soluble vitamins, and a portion of the total protein (*e*.*g*., sodium caseinate) with continued heat and agitation. The CHO-MIN slurry is formed by adding with heated agitation to water: minerals, such as potassium sources (*e*.*g*., potassium citrate), and thickening or suspending agents (*e*.*g*., avicel, gellan, carrageenan). The resulting CHO-MIN slurry is held for 5-10 minutes with continued heat and agitation before adding additional components, such as trace and ultra trace minerals (TM/UTM premix), and minerals such as potassium and phosphate sources (*e*.*g*., potassium chloride, magnesium carbonate, potassium iodide), calcium HMB, and casein phosphopeptide. This solution undergoes continued heated agitation for 3 minutes to 20 minutes to form a calcium HMB-casein phosphopeptide complex. Additional minerals are then added to the slurry (*e*.*g*., sodium chloride, potassium iodide), or carbohydrates (*e*.*g*., fructooligosaccharide, sucrose, corn syrup), or combinations thereof. The PIW slurry is then formed by mixing with heat and agitation the remaining protein (*e*.*g*., milk protein concentrate, sodium caseinate).

The resulting slurries are then blended together with heated agitation and the pH is adjusted to 6.6 to 7, after which the nutritional composition is subjected to high-temperature short-time (HTST) processing during which the nutritional composition is heat treated, emulsified and homogenized, and then allowed to cool. Water soluble vitamins and ascorbic acid are added, the pH is adjusted to the desired range if necessary, flavors are added, and water is added to achieve the desired total solid level. The nutritional composition is then aseptically packaged to form an aseptically packaged nutritional liquid emulsion, or the nutritional composition can be added to retort stable containers and then subjected to retort sterilization to form retort sterilized nutritional emulsions. This nutritional liquid emulsion can then be further diluted, heat-treated, and packaged to form a ready-to-feed or concentrated liquid, or it can be heat-treated and subsequently processed and packaged as a reconstitutable powder (*e*.*g*., spray dried, dry mixed, agglomerated).

A nutritional powder, such as a spray dried nutritional powder or dry mixed nutritional powder, may be prepared by any collection of known or otherwise effective technique, suitable for making and formulating a nutritional powder. For example, when the nutritional powder is a spray dried nutritional powder, the spray drying step may likewise include any spray drying technique that is known for or otherwise suitable for use in the production of nutritional powders. Many different spray drying methods and techniques are known for use in the nutrition field, all of which are suitable for use in the manufacture of the spray dried nutritional powders herein.

One method of preparing the spray dried nutritional powder comprises forming and homogenizing an aqueous slurry or liquid comprising predigested fat, and optionally protein, carbohydrate, and other sources of fat, and then spray drying the slurry or liquid to produce a spray dried nutritional powder. The method may further comprise the step of spray drying, dry mixing, or otherwise adding additional nutritional ingredients, including any one or more of the ingredients described herein, to the spray dried nutritional powder.

Other suitable methods for making nutritional products are described, for example, in U.S. Patent No. 6,365,218 (Borschel, et al.), U.S. Patent No. 6,589,576 (Borschel, et al.), U.S. Patent No. 6,306,908 (Carlson, et al.), U.S. Patent Appl. Pub. No. 20030118703 A1(Nguyen, et al.).

The exemplary processes for manufacturing nutritional compositions according to the first, second, and third embodiments described herein may be carried out in ways other than those specifically described without departing from the spirit and scope of the present disclosure. The exemplary processes are, therefore, to be considered in all respects illustrative and not restrictive and that all changes and equivalents also come within the description of the present disclosure.

As briefly mentioned above, the nutritional compositions according to the first, second, and third embodiments described herein are useful to provide sole, primary, or supplemental sources of nutrition, and also provide individuals with one or more benefits as described herein. Accordingly, the nutritional compositions may be administered orally as needed to provide the desired level of nutrition, most typically in the form of one to two servings daily, in one or two or more divided doses daily *(e.g.,* a serving size for a liquid nutritional composition typically ranges from 100 milliliters to 500 milliliters, including from 150 milliliters to 300 milliliters, including from 200 milliliters to 240 milliliters, wherein each serving contains from 0.4 grams to 4 grams of HMB, including from 0.75 grams to 2 grams, and also including 1.5 grams).

Nutritional compositions according to the first, second, and third embodiments disclosed herein are suitable for daily use (*i.e.,* consumption) over an extended period of time from 1 to 6 months or more, including from 1 to 3 months, to: 1) support maintenance of lean body mass; 2) support strength or muscle strength or both; 3) decrease protein breakdown and decrease damage to muscle cells; 4) assist muscle recovery following exercise or other trauma; 5) reduce muscle protein breakdown following exercise; and 6) reduce muscle loss.

The nutritional compositions according to the first, second, and third embodiments described herein may also be used to: 1) maintain and support lean body mass in elderly subjects with sarcopenia; 2) provide nutrition to support an active and independent lifestyle in individuals, especially in the elderly; 3) support recovery of muscle strength; 4) assist in rebuilding muscle and regaining strength; and 5) improve strength, including muscle strength, and mobility.

The nutritional compositions according to the first, second, and third embodiments of the present disclosure are also suitable for reducing muscle loss and promoting muscle mass building in particular, in individuals, including elderly individuals, with metabolic disorders. As used herein, "metabolic disorders" refers to disorders or defects in the metabolism of an individual, which also includes inherited metabolic disorders. Exemplary metabolic disorders in which the nutritional compositions according to the first, second, and third embodiments of the present disclosure may be applicable in treating or preventing or reducing or combinations thereof, include diabetes, chronic kidney dysfunction, end stage renal failure and the like. Because embodiments according to the first embodiment and certain embodiments according to the second and third embodiments of the present disclosure provide a nutritional composition including protein and calcium HMB that has been stabilized without the need for substantial amounts of potassium and sodium phosphates and citrates, the nutritional compositions may be particularly beneficial for reducing muscle loss and promoting muscle mass building in individuals with chronic kidney dysfunction and end stage renal failure as the nutritional compositions contain relatively low levels of potassium, sodium and phosphorus ions.

### EXAMPLES

The following examples illustrate certain embodiments or features of a nutritional composition according to the first, second, and third embodiments disclosed herein. The examples are given solely for the purpose of illustration. All exemplified amounts are weight percentages based upon the total weight of the composition, unless otherwise specified.

### Example 1

Example 1 illustrates an embodiment of a liquid nutritional composition according to the first, second, and third embodiments of the present disclosure, the ingredients of which are listed in Table 1 below. All ingredient amounts are listed as kilogram per 1000 kilogram batch of product, unless otherwise specified.

| **TABLE 1** | | |
|---|---|---|
| Ingredient | Control | Example 1 (0.1 % CPP) |
| Water | Q.S | Q.s. |
| Maltodextrin DE 10 | 14.5 | 14.5 |
| Fructose | 15.4 | 15.4 |
| Sucromalt | 25.4 | 25.4 |
| Milk Protein Concentrate | 57.7 | 57.7 |
| Canola Oil | 17.8 | 17.8 |
| Soy Oil | 14.9 | 14.9 |
| Casein Phosphopeptide (CPP) | 0 | 1 |
| Sodium Caseinate | 26.2 | 26.2 |
| High Oleic Safflower Oil | 23.7 | 23.7 |
| Soy Protein Isolate | 9.1 | 9.1 |
| Glycerol | 25 | 25 |
| FOS Powder | 11.7 | 11.7 |
| Soluble Fiber | 40.2 | 40.2 |
| Calcium HMB | 6.7 | 6.7 |
| Magnesium Phosphate Dibasic | 3.1 | 3.1 |
| Potassium Citrate | 3.6 | 3.6 |
| Disodium Phosphate | 1.5 | 3.1 |
| Soy Lecithin | 2.1 | 2.1 |
| Potassium Phosphate Dibasic | 1 | 1 |
| Sodium Chloride | 0.7 | 0.7 |
| Ascorbic Acid | 0.6 | 0.6 |
| Potassium Hydroxide | 0.4 | 0.4 |
| WSV/TM/UTM Combo Premix | 0.27 | 0.27 |
| Potassium Iodide (g) | 0.086 | 0.086 |
| Choline Chloride | 0.48 | 0.48 |
| Vitamin B12 (g) | 0.00726 | 0.00726 |
| Vitamin A Palmitate (g) | 3.72 | 3.72 |

The amounts of sodium, potassium, and phosphorus in the Control and Example 1 were theoretically calculated based upon the contributions by the various ingredients. For the Control and Example 1, the following values were calculated: sodium concentration of 1200 ppm (or about 313 mg/8 oz. serving); potassium concentration of 2000 ppm (or about 522 mg/8 oz. serving); and phosphorus concentration of 2100 ppm (or about 548 mg/8 oz. serving).

Nutritional compositions according to Control and Example 1 were tested for soluble calcium after high speed centrifugation. The centrifugation was carried out at 31,000 x g at 20° C for 8 hours. Table 2 below reports the soluble calcium concentrations of Control and Example 1, expressed as milligrams of calcium per kilograms of supernatant.

| **TABLE 2** | |
|---|---|
| Nutritional Composition | Soluble Ca (mg/kg) |
| Control | 458 |
| Example 1 | 319 |

As can be seen from the above table, Example 1, which includes casein phosphopeptide as described in connection with the first, second, and third embodiments of the present disclosure, has 30% less soluble calcium as compared to Control. As described above, the divalent calcium ions react or interact with protein in the nutritional composition, which can lead to issues such as stability, precipitation, sedimentation, and increased viscosity. Nutritional compositions according to the first, second, and third embodiments of the present disclosure, such as Example 1, can effectively prevent or reduce such issues.

### Examples 2-6

Examples 2-6 illustrate embodiments of a liquid nutritional composition according to the first, second, and third embodiments of the present disclosure, the ingredients of which are listed in the table below. All ingredient amounts are listed as kilogram per 1000 kilogram batch of product, unless otherwise specified.

| **TABLE 3** | | | | | | |
|---|---|---|---|---|---|---|
| Ingredient | Control | Ex. 2 | Ex. 3 | Ex. 4 | Ex. 5 | Ex. 6 |
| Water | Q.S | Q.S. | Q.S | Q.S | Q.S | Q.S |
| Maltodextrin DE 10 | 12.4 | 12.4 | 12.4 | 12.4 | 12.4 | 12.4 |
| Fructose | 11.7 | 11.7 | 11.7 | 11.7 | 11.7 | 11.7 |
| Sucromalt | 31.7 | 31.7 | 31.7 | 31.7 | 31.7 | 31.7 |
| Milk Protein Concentrate | 33.9 | 33.9 | 33.9 | 33.9 | 33.9 | 33.9 |
| Canola Oil | 14.5 | 14.5 | 14.5 | 14.5 | 14.5 | 14.5 |
| Soy Oil | 12.1 | 12.1 | 12.1 | 12.1 | 12.1 | 12.1 |
| Casein Phosphopeptide (CPP) | 0 | 0.1 | 0.15 | 0.2 | 0.25 | 0.3 |
| Sodium Caseinate | 31.8 | 31.8 | 31.8 | 31.8 | 31.8 | 31.8 |
| High Oleic Safflower Oil | 19.2 | 19.2 | 19.2 | 19.2 | 19.2 | 19.2 |
| Soy Protein Isolate | 16.6 | 16.6 | 16.6 | 16.6 | 16.6 | 16.6 |
| Glycerol | 21.5 | 21.5 | 21.5 | 21.5 | 21.5 | 21.5 |
| FOS Powder | 13.1 | 13.1 | 13.1 | 13.1 | 13.1 | 13.1 |
| Soluble Fiber | 32.9 | 32.9 | 32.9 | 32.9 | 32.9 | 32.9 |
| Calcium HMB | 6.5 | 6.5 | 6.5 | 6.5 | 6.5 | 6.5 |
| Magnesium Phosphate Dibasic | 0.5 | 0.5 | 0.5 | 0.5 | 0.5 | 0.5 |
| Potassium Citrate | 2.0 | 2.0 | 2.0 | 2.0 | 2.0 | 2.0 |
| Disodium Phosphate | 0.0 | 0.0 | 0.0 | 0.0 | 0.0 | 0.0 |
| Soy Lecithin | 1.7 | 1.7 | 1.7 | 1.7 | 1.7 | 1.7 |
| Sodium Chloride | 0.80 | 0.80 | 0.80 | 0.80 | 0.80 | 0.80 |
| Ascorbic Acid | 0.60 | 0.60 | 0.60 | 0.60 | 0.60 | 0.60 |
| Potassium Hydroxide | 0.41 | 0.41 | 0.41 | 0.41 | 0.41 | 0.41 |
| WSV/TM/UTM Combo Premix | 0.27 | 0.27 | 0.27 | 0.27 | 0.27 | 0.27 |
| Potassium Iodide (g) | 0.086 | 0.086 | 0.086 | 0.086 | 0.086 | 0.086 |
| Choline Chloride | 0.48 | 0.48 | 0.48 | 0.48 | 0.48 | 0.48 |
| Vitamin B12 (g) | 0.0073 | 0.0073 | 0.0073 | 0.0073 | 0.0073 | 0.0073 |
| Cellulose Gel/Cellulose Gum | 3.0 | 3.0 | 3.0 | 3.0 | 3.0 | 3.0 |
| Calcium Carbonate | 1.3 | 1.3 | 1.3 | 1.3 | 1.3 | 1.3 |
| Magnesium Hydroxide | 0.90 | 0.90 | 0.90 | 0.90 | 0.90 | 0.90 |
| Sodium Citrate | 0.65 | 0.65 | 0.65 | 0.65 | 0.65 | 0.65 |
| Carrageenan | 0.15 | 0.15 | 0.15 | 0.15 | 0.15 | 0.15 |

The amounts of sodium, potassium, and phosphorus in the Control and Examples 2-6 were determined by inductively coupled plasma atomic emission spectrometry (ICP-AES), and are presented below in Table 4.

| **TABLE 4** | | | | |
|---|---|---|---|---|
| Experimental Group | Units of Measure | Sodium | Potassium | Phosphorus |
| Control | ppm | 1110 | 964 | 747 |
| | mg/8 oz. | 290 | 252 | 195 |
| Example 2 | ppm | 1150 | 1020 | 744 |
| | mg/8 oz. | 300 | 266 | 194 |
| Example 3 | ppm | 1120 | 981 | 770 |
| | mg/8 oz. | 292 | 256 | 201 |
| Example 4 | ppm | 1160 | 992 | 794 |
| | mg/8 oz. | 303 | 259 | 207 |
| Example 5 | ppm | 1090 | 928 | 782 |
| | mg/8 oz. | 284 | 242 | 204 |
| Example 6 | ppm | 1130 | 971 | 949 |
| | mg/8 oz. | 295 | 253 | 248 |

Nutritional compositions according to Control and Example 2-6 were tested for soluble calcium after high speed centrifugation. The centrifugation was carried out at 31,000 x g at 20°C for 8 hours. Table 5 below reports the soluble calcium concentrations of Control and Examples 2-6, expressed as milligrams of calcium per kilograms of supernatant.

| **TABLE 5** | |
|---|---|
| Nutritional Composition | Soluble Ca (mg/kg) |
| Control | 411 |
| Example 2 (0.01% CPP) | 435 |
| Example 3 (0.015% CPP) | 408 |
| Example 4 (0.02% CPP) | 410 |
| Example 5 (0.025% CPP) | 398 |
| Example 6 (0.03% CPP) | 416 |

As can be seen from Table 5, Examples 3-5, which include casein phosphopeptide as described in connection with the first, second, and third embodiments of the present disclosure, resulted in less soluble calcium as compared to Control. As discussed above, less soluble calcium in the nutritional composition helps prevent or reduce unwanted reactions or interactions with the protein species, especially during high temperature processing.

The present disclosure provides methods for solving longstanding problems with manufacturing nutritional compositions, particularly liquid formulations, that include protein and calcium HMB, including, but not limited to, issues such as precipitation, sedimentation, stability, electrolyte load, and increased viscosity. The present disclosure also provides the solutions to these problems without the substantial use of traditional organic acid salts comprised of sodium and potassium citrates, which make many such products unsuitable for individuals with metabolic disorders. By using casein phosphopeptide in combination with calcium HMB prior to incorporation of the calcium HMB into the nutritional composition, the amount of soluble divalent calcium available in the nutritional composition is substantially reduced such that the interaction between the soluble calcium species and the protein present in the nutritional composition is also substantially reduced and unwanted precipitation and sedimentation is minimized or eliminated. The present disclosure accomplishes this without substantial use of unwanted electrolyte-containing materials that can be detrimental to a substantial population of the intended users.

To the extent that the term "includes" or "including" is used in the specification or the claims, it is intended to be inclusive in a manner similar to the term "comprising" as that term is interpreted when employed as a transitional word in a claim. Furthermore, to the extent that the term "or" is employed *(e.g.,* A or B) it is intended to mean "A or B or both." When the applicants intend to indicate "only A or B but not both" then the term "only A or B but not both" will be employed. Thus, use of the term "or" herein is the inclusive, and not the exclusive use. Also, to the extent that the terms "in" or "into" are used in the specification or the claims, it is intended to additionally mean "on" or "onto."

While the present application has been illustrated by the description of embodiments thereof, and while the embodiments have been described in considerable detail, it is not the intention of the applicants to restrict or in any way limit the scope of the appended claims to such detail. Additional advantages and modifications will readily appear to those skilled in the art. Therefore, the application, in its broader aspects, is not limited to the specific details, the representative compositions and processes, and illustrative examples shown and described.

## Claims

1. A nutritional composition comprising:
a calcium β-hydroxy-β-methylbutyrate-casein phosphopeptide complex in an amount sufficient to provide 0.4 grams to 4 grams of β-hydroxy-β-methylbutyrate per serving;
from 5 grams to 50 grams of protein per serving;
potassium in a concentration of less than 2500 ppm;
sodium in a concentration of less than 1600 ppm; and
phosphorus in a concentration of less than 3200 ppm.

2. The nutritional composition according to claim 1, further comprising 0.1 grams to 20 grams of fat per serving, and 0.1 grams to 50 grams of carbohydrate per serving.

3. The nutritional composition of claim 2, wherein the fat is provided by at least one source selected from the group consisting of high oleic safflower oil, high oleic sunflower oil, canola oil, soy oil, and combinations thereof, and the carbohydrate is provided by at least one source selected from the group consisting of maltodextrin, sucrose, fructose, sucromalt, and combinations thereof.

4. The nutritional composition according to claim 2, wherein the protein is provided from at least one source selected from the group consisting of calcium caseinate, sodium caseinate, milk protein concentrate, milk protein isolate, whey protein concentrate, whey protein isolate, whey protein hydrolysate, soy protein isolate, soy protein concentrate, soy protein hydrolysate, pea protein concentrate, pea protein isolate, pea protein hydrolysate, and combinations thereof.

5. The nutritional composition according to claim 2, wherein the nutritional composition is a liquid, and the serving is from 150 milliliters to 500 milliliters.

6. The nutritional composition according to any one of claims 1-5, wherein the potassium concentration ranges from 800 ppm to 1000 ppm, the sodium concentration ranges from 910 ppm to 1100 ppm, and the phosphorus concentration ranges from 625 ppm to 800 ppm.

7. The nutritional composition according to any one of claims 1-5 wherein the ratio of potassium:sodium is greater than 1, and the ratio of phosphorus: sodium is greater than 1.

8. The nutritional composition according to any one of claims 1-5 wherein the combined amount of sodium, phosphorus, and potassium is no more than 7000 ppm.

9. The nutritional composition according to claim 8 wherein the combined amount of sodium, phosphorus, and potassium ranges from 2300 ppm to 5000 ppm.

10. A method for preparing a protein-containing nutritional composition with calcium β-hydroxy-β-methylbutyrate, the method comprising:
a) mixing calcium β-hydroxy-β-methylbutyrate with casein phosphopeptide to produce a calcium β-hydroxy-β-methylbutyrate-casein phosphopeptide complex, wherein the weight ratio of calcium β-hydroxy-β-methylbutyrate to casein phosphopeptide ranges from 3:1 to 70:1; and
b) mixing the calcium β-hydroxy-β-methylbutyrate-casein phosphopeptide complex with at least one source of protein to produce a nutritional composition;
wherein the nutritional composition comprises from 5 grams to 50 grams of protein per serving.

11. The method according to claim 10, wherein a) comprises:
mixing the casein phosphopeptide and calcium β-hydroxy-β-methylbutyrate within an aqueous solution, the aqueous solution optionally containing phosphorus and potassium; and
agitating the mixture for 3 minutes to 20 minutes to form the calcium β-hydroxy-β-methylbutyrate-casein phosphopeptide complex.

12. The method according to any one of claims 10-11, wherein b) further comprises mixing at least one source of fat and at least one source of carbohydrate along with the calcium β-hydroxy-β-methylbutyrate-casein phosphopeptide complex and the at least one source of protein.

13. The method according to claim 12, wherein the at least one source of fat is selected from the group consisting of high oleic safflower oil, high oleic sunflower oil, canola oil, soy oil, and combinations thereof, and the at least one source of carbohydrate is selected from the group consisting of maltodextrin, sucrose, fructose, sucromalt, and combinations thereof.

14. The method according to any one of claims 10-11, wherein the at least one source of protein source is selected from the group consisting of calcium caseinate, sodium caseinate, milk protein concentrate, milk protein isolate, whey protein concentrate, whey protein isolate, whey protein hydrolysate, soy protein isolate, soy protein concentrate, soy protein hydrolysate, pea protein concentrate, pea protein isolate, pea protein hydrolysate, and combinations thereof.

15. The method according to any one of claims 10-11, wherein the nutritional composition has potassium in a concentration of less than 2500 ppm, sodium in a concentration of less than 1600 ppm, and phosphorus in a concentration of less than 3200 ppm.

16. The method according to claim 15, wherein the nutritional composition has potassium in a concentration ranging from 800 ppm to 1000 ppm, sodium in a concentration ranging from 910 ppm to 1100 ppm, and phosphorus in a concentration ranging from 625 ppm to 800 ppm.

## Patentansprüche

1. Nahrungsmittelzusammensetzung, die aufweist:
einen Calcium-β-hydroxy-β-methylbutyrat-Casein-Phosphopeptid-Komplex in einer Menge, die ausreicht, um 0,4 bis 4 Gramm β-Hydroxy-β-methylbutyrat pro Portion bereitzustellen; 5 bis 50 Gramm Protein pro Portion;
Kalium in einer Konzentration von weniger als 2500 ppm;
Natrium in einer Konzentration von weniger als 1600 ppm; und
Phosphor in einer Konzentration von weniger als 3200 ppm.

2. Nahrungsmittelzusammensetzung nach Anspruch 1, die ferner 0,1 bis 20 g Fett pro Portion und 0,1 bis 50 Gramm Kohlenhydrat pro Portion enthält.

3. Nahrungsmittelzusammensetzung nach Anspruch 2, wobei das Fett durch zumindest eine Quelle bereitgestellt wird, die unter Distelöl mit einem hohen Anteil an Ölsäure, Sonnenblumenöl mit einem hohen Anteil an Ölsäure, Rapsöl, Sojaöl und deren Kombinationen ausgewählt ist, und das Kohlenhydrat durch zumindest eine Quelle bereitgestellt wird, die unter Maltodextrin, Saccharose, Fructose, Sucromalt und deren Kombinationen ausgewählt ist.

4. Nahrungsmittelzusammensetzung nach Anspruch 2, wobei das Protein durch zumindest eine Quelle bereitgestellt wird, die unter Calciumcaseinat, Natriumcaseinat, Milchproteinkonzentrat, Milchproteinisolat, Molkeproteinkonzentrat, Molkeproteinisolat, Molkeproteinhydrolysat, Sojaproteinisolat, Sojaproteinkonzentrat, Sojaproteinhydrolysat, Erbsenproteinkonzentrat, Erbsenproteinisolat, Erbsenproteinhydrolysat und deren Kombinationen ausgewählt ist.

5. Nahrungsmittelzusammensetzung nach Anspruch 2, wobei es sich bei der Nahrungsmittelzusammensetzung um eine Flüssigkeit handelt und die Portion 150 bis 500 Milliliter beträgt.

6. Nahrungsmittelzusammensetzung nach einem der Ansprüche 1 bis 5, wobei die Kaliumkonzentration im Bereich von 800 bis 1000 ppm liegt, die Natriumkonzentration im Bereich von 910 bis 1100 ppm liegt und die Phosphorkonzentration im Bereich von 625 bis 800 ppm liegt.

7. Nahrungsmittelzusammensetzung nach einem der Ansprüche 1 bis 5, wobei das Verhältnis von Kalium : Natrium größer als 1 ist und das Verhältnis von Phosphor : Natrium größer als 1 ist.

8. Nahrungsmittelzusammensetzung nach einem der Ansprüche 1 bis 5, wobei die kombinierte Menge von Natrium, Phosphor und Kalium nicht mehr als 7000 ppm ausmacht.

9. Nahrungsmittelzusammensetzung nach Anspruch 8, wobei die kombinierte Menge von Natrium, Phosphor und Kalium im Bereich von 2300 bis 5000 ppm liegt.

10. Verfahren zur Herstellung einer proteinhaltigen Nahrungsmittelzusammensetzung mit Calcium-β-Hydroxy-β-methylbutyrat, wobei das Verfahren umfasst:
a) Mischen von Calcium-β-Hydroxy-β-methylbutyrat mit Casein-Phosphopeptid zur Bildung eines Calcium-β-hydroxy-β-methylbutyrat-Casein-Phosphopeptid-Komplexes, wobei das Gewichtsverhältnis von Calcium-β-Hydroxy-β-methylbutyrat und Casein-Phosphopeptid im Bereich von 3 : 1 bis 70 : 1 liegt; und
b) Mischen des Calcium-β-hydroxy-β-methylbutyrat-Casein-Phosphopeptid-Komplexes mit zumindest einer Proteinquelle zur Bildung einer Nahrungsmittelzusammensetzung;
wobei die Nahrungsmittelzusammensetzung 5 bis 50 Gramm Protein pro Portion aufweist.

11. Verfahren nach Anspruch 10, wobei a) umfasst:
Mischen des Casein-Phosphopeptids mit Calcium-β-Hydroxy-β-methylbutyrat in einer wässrigen Lösung, wobei die wässrige Lösung optional Phosphor und Kalium enthält; und
Rühren des Gemisches für 3 bis 20 Minuten zur Bildung des Calcium-β-hydroxy-β-methylbutyrat-Casein-Phosphopeptid-Komplexes.

12. Verfahren nach einem der Ansprüche 10 bis 11, wobei b) ferner umfasst, zumindest eine Fettquelle und zumindest eine Kohlenhydratquelle zusammen mit dem Calcium-β-hydroxy-β-methylbutyrat-Casein-Phosphopeptid-Komplex und der zumindest einen Proteinquelle zu vermischen.

13. Verfahren nach Anspruch 12, wobei die zumindest eine Fettquelle unter Distelöl mit einem hohen Anteil an Ölsäure, Sonnenblumenöl mit einem hohen Anteil an Ölsäure, Rapsöl, Sojaöl und deren Kombinationen ausgewählt ist und die zumindest eine Kohlenhydratquelle unter Maltodextrin, Saccharose, Fructose, Sucromalt und deren Kombinationen ausgewählt ist.

14. Verfahren nach einem der Ansprüche 10 bis 11, wobei die zumindest eine Proteinquelle unter Calciumcaseinat, Natriumcaseinat, Milchproteinkonzentrat, Milchproteinisolat, Molkeproteinkonzentrat, Molkeproteinisolat, Molkeproteinhydrolysat, Sojaproteinisolat, Sojaproteinkonzentrat, Sojaproteinhydrolysat, Erbsenproteinkonzentrat, Erbsenproteinisolat, Erbsenproteinhydrolysat und deren Kombinationen ausgewählt ist.

15. Verfahren nach einem der Ansprüche 10 bis 11, wobei die Nahrungsmittelzusammensetzung Kalium in einer Konzentration von weniger als 2500 ppm, Natrium in einer Konzentration von weniger als 1600 ppm und Phosphor in einer Konzentration von weniger als 3200 ppm enthält.

16. Verfahren nach Anspruch 15, wobei die Nahrungsmittelzusammensetzung Kalium in einer Konzentration im Bereich von 800 bis 1000 ppm, Natrium in einer Konzentration im Bereich von 910 bis 1100 ppm und Phosphor in einer Konzentration im Bereich von 625 bis 800 ppm enthält.

## Revendications

1. Composition nutritionnelle comprenant :
un complexe phosphopeptide de caséine-β-hydroxy-β-méthylbutyrate de calcium en une quantité suffisante pour fournir 0,4 gramme à 4 grammes de β-hydroxy-β-méthylbutyrate par portion ;
5 grammes à 50 grammes de protéine par portion ; du potassium à une concentration inférieure à 2500 ppm ;
du sodium à une concentration inférieure à 1600 ppm ; et
du phosphore à une concentration inférieure à 3200 ppm.

2. Composition nutritionnelle selon la revendication 1, comprenant en outre 0,1 gramme à 20 grammes de lipide par portion et 0,1 gramme à 50 grammes de glucide par portion.

3. Composition nutritionnelle de la revendication 2, dans laquelle le lipide est fourni par au moins une source choisie dans le groupe consistant en l'huile de carthame à haute teneur en acide oléique, l'huile de tournesol à haute teneur en acide oléique, l'huile de colza, l'huile de soja et leurs combinaisons, et le glucide est fourni par au moins une source choisie dans le groupe consistant en la maltodextrine, le saccharose, le fructose, le sucromalt, et leurs combinaisons.

4. Composition nutritionnelle selon la revendication 2, dans laquelle la protéine est fournie à partir d'au moins une source choisie dans le groupe consistant en le caséinate de calcium, le caséinate de sodium, un concentré de protéines de lait, un isolat de protéines de lait, un concentré de protéines de lactosérum, un isolat de protéines de lactosérum, un hydrolysat de protéines de lactosérum, un isolat de protéines de soja, un concentré de protéines de soja, un hydrolysat de protéines de soja, un concentré de protéines de pois, un isolat de protéines de pois, un hydrolysat de protéines de pois et leurs combinaisons.

5. Composition nutritionnelle selon la revendication 2, dans laquelle la composition nutritionnelle est un liquide, et la portion est de 150 millilitres à 500 millilitres.

6. Composition nutritionnelle selon l'une quelconque des revendications 1 à 5, dans laquelle la concentration de potassium se trouve dans la plage allant de 800 ppm à 1000 ppm, la concentration de sodium se trouve dans la plage allant de 910 ppm à 1100 ppm, et la concentration de phosphore se trouve dans la plage allant de 625 ppm à 800 ppm.

7. Composition nutritionnelle selon l'une quelconque des revendications 1 à 5, dans laquelle le rapport potassium : sodium est supérieur à 1 et le rapport phosphore : sodium est supérieur à 1.

8. Composition nutritionnelle selon l'une quelconque des revendications 1 à 5, dans laquelle la quantité combinée de sodium, de phosphore et de potassium ne dépasse pas 7000 ppm.

9. Composition nutritionnelle selon la revendication 8, dans laquelle la quantité combinée de sodium, de phosphore et de potassium se trouve dans la plage allant de 2300 ppm à 5000 ppm.

10. Procédé pour préparer une composition nutritionnelle contenant des protéines avec du β-hydroxy-β-méthylbutyrate de calcium, le procédé comprenant le fait :
a) de mélanger le β-hydroxy-β-méthylbutyrate de calcium avec le phosphopeptide de caséine pour produire un complexe phosphopeptide de caséine-β-hydroxy-β-méthylbutyrate de calcium, où le rapport pondéral du β-hydroxy-β-méthylbutyrate de calcium sur le phosphopeptide de caséine se trouve dans la plage allant de 3 : 1 à 70 : 1 ; et
b) de mélanger le complexe phosphopeptide de caséine-β-hydroxy-β-méthylbutyrate de calcium avec au moins une source de protéine pour produire une composition nutritionnelle ;
dans lequel la composition nutritionnelle comprend 5 grammes à 50 grammes de protéine par portion.

11. Procédé selon la revendication 10, dans lequel a) comprend le fait :
de mélanger le phosphopeptide de caséine et le β-hydroxy-β-méthylbutyrate de calcium dans une solution aqueuse, la solution aqueuse contenant facultativement du phosphore et du potassium ; et
d'agiter le mélange pendant 3 minutes à 20 minutes pour former le complexe phosphopeptide de caséine-β-hydroxy-β-méthylbutyrate de calcium.

12. Procédé selon l'une quelconque des revendications 10 et 11, dans lequel b) comprend en outre le fait de mélanger au moins une source de lipide et au moins une source de glucide avec le complexe phosphopeptide de caséine-β-hydroxy-β-méthylbutyrate de calcium et l'au moins une source de protéine.

13. Procédé selon la revendication 12, dans lequel l'au moins une source de lipide est choisie dans le groupe consistant en l'huile de carthame à haute teneur en acide oléique, l'huile de tournesol à haute teneur en acide oléique, l'huile de colza, l'huile de soja et leurs combinaisons, et l'au moins une source de glucide est choisie dans le groupe consistant en la maltodextrine, le saccharose, le fructose, le sucromalt et leurs combinaisons.

14. Procédé selon l'une quelconque des revendications 10 et 11, dans lequel l'au moins une source de protéine est choisie dans le groupe consistant en le caséinate de calcium, le caséinate de sodium, un concentré de protéines de lait, un isolat de protéines de lait, un concentré de protéines de lactosérum, un isolat de protéines de lactosérum, un hydrolysat de protéines de lactosérum, un isolat de protéines de soja, un concentré de protéines de soja, un hydrolysat de protéines de soja, un concentré de protéines de pois, un isolat de protéines de pois, un hydrolysat de protéines de pois et leurs combinaisons.

15. Procédé selon l'une quelconque des revendications 10 et 11, dans lequel la composition nutritionnelle contient du potassium à une concentration inférieure à 2500 ppm, du sodium à une concentration inférieure à 1600 ppm et du phosphore à une concentration inférieure à 3200 ppm.

16. Procédé selon la revendication 15, dans lequel la composition nutritionnelle contient du potassium à une concentration se trouvant dans la plage allant de 800 ppm à 1000 ppm, du sodium à une concentration se trouvant dans la plage allant de 910 ppm à 1100 ppm et du phosphore à une concentration se trouvant dans la plage allant de 625 ppm à 800 ppm.
